# EUROPEAN PATENT APPLICATION

(11) **EP 4 760 535 A1**
(43) Date of publication of application: **17.06.2026**
(21) Application number: 25214822.6
(22) Date of filing: 11.11.2025
(51) Int. Cl.: G06F 16/334, G06F 21/62, H04L 9/00

(54) **INFORMATION PROCESSING SYSTEM AND INFORMATION PROCESSING METHOD**

(30) Priority: 13.12.2024 JP 2024219484
(71) Applicant: FUJITSU LIMITED, Kawasaki-shi, Kanagawa 211-8588 (JP)
(72) Inventor: KOJIMA, Rikuhiro, Kawasaki-shi, 211-8588 (JP); FUJI, Masaru, Kawasaki-shi, 211-8588 (JP); TAGO, Shinichiro, Kawasaki-shi, 211-8588 (JP); MURAKAMI, Katsuhiko, Kawasaki-shi, 211-8588 (JP); ABE, Shuya, Kawasaki-shi, 211-8588 (JP); MORIKAWA, Hiroaki, Kawasaki-shi, 211-8588 (JP); MITSUISHI, Yutaka, Kawasaki-shi, 211-8588 (JP)
(74) Representative: Haseltine Lake Kempner LLP

(57) **Abstract**

A provider terminal apparatus encrypts a vector obtained by vectorizing a plurality of pieces of provided date with homomorphic encryption to generate indexes, generates a plurality of pieces of encrypted data obtained by encrypting the pieces of provided data, and transmits a search table in which the indexes and the encrypted data are included to an information search server (1). A searcher terminal apparatus transmits a search query obtained by encrypting a vector obtained by vectorizing query information with homomorphic encryption to the information search server (1). The information search server (1) performs homomorphic operation according to the homomorphic encryption between the search query and each of the indexes registered in the search table, creates a similarity list, and transmits the similarity list to the searcher terminal apparatus. The searcher terminal apparatus extracts a similar index similar to the search query based on the similarity list.

## Description

### FIELD

The embodiment discussed herein is related to an information processing system and an information processing method.

### BACKGROUND

In the large language model (LLM) technology, information the validity of which is not able to be verified from training data may be returned to a user. The information the validity of which is not able to be verified from the training data is also called hallucination. This is a problem related to the reliability of the LLM, and various studies have been conducted to resolve this problem.

As a measure of solving this problem, a technology called retrieval augmented generation (RAG), one of the mechanisms for information search, has been developed. RAG performs search using a knowledge database created in advance, and can thereby obtain domain-specific, highly accurate answers.

In the RAG service, a search process is performed according to the following procedure. Here, assumed is a three-way body including a data provider, a data searcher, and a server. The data provider uses a transformation algorithm called embedding for each piece of data to create an index, which is information that transforms the data into a low-dimensional vector. The data provider then registers the index and the data in correspondence with each other in the server that provides the RAG service. The data searcher transmits a search query to the server. The server converts the search query into an index, and searches for data with the indexes close to each other using, for example, cos similarity. The server then creates a summary from the collected data, and provides the data searcher with the created summary as an answer.

Meanwhile, there is a technology called searchable encryption as an encryption technology that satisfies requirements such as the confidentiality of queries and the confidentiality of provided data. Searchable encryption is an encryption technology that searches for a document containing a keyword among encrypted documents.

In searches using searchable encryption, an encrypted index and an encrypted document corresponding to each data are stored in a database in advance, and a search process is performed according to the following procedure. A data searcher encrypts a keyword contained in a search query, generates a keyword token, and transmits the keyword token to a server to request a search. The server searches for an encrypted index using the keyword token. The server then provides the data searcher with an encrypted document matching the search. The data searcher decrypts the provided encrypted document to acquire a search result.

For example, as a technology of searchable encryption, a technology has been developed that clusters indexes using a feature of data, and performs comparison based on a priority adjusted in accordance with whether a hit has been found in comparison against representative data of each cluster at the time of search. In addition, a technology that performs search using a confidential search using a semantic search and clustering has been developed. The related technologies are described, for example, in:

Patent Literature 1: International Publication Pamphlet No. WO 2013/080365

Non-Patent Literature 1: Hilal Asi, Fabian Boemer, Nicholas Genise, Haris Mughees, Tabitha Ogilvie, Rehan Rishi, Guy N. Rothblum, Kunal Talwar, Karl Tarbe, Ruiyu Zhu, Marco Zuliani, "Scalable Private Search with Wally" Apple, Royal Holloway, University of London 10 Jun 2024, arXiv: 2406.06761v5, (searched on November 14, 2024), Internet <URL:
https://arxiv.org/pdf/2406.06761>.

However, RAG is only a mechanism for information search and does not sufficiently address security and privacy. Therefore, it is difficult to meet requirements such as the confidentiality of queries and the confidentiality of provided data. The confidentiality of queries is a requirement that information about queries of a data searcher, such as search history, can be kept secret from the server. In addition, the confidentiality of provided data is a requirement that the data provided by the data provider need not be stored on the server as a countermeasure against data extraction or unauthorized use of a model.

In addition, when searchable encryption is used, available searches are basically limited to a word match search and a range search, and advanced searches using natural sentences, which are feasible with RAG, are difficult. For example, the search of an encrypted index is limited to a search whether a keyword is included in a word set or a similarity search, and it is difficult to perform advanced searches for question sentences using natural sentences such as RAG.

A further possible method is to combine the encrypted index in searchable encryption with RAG in correspondence with each other. However, a vector generated by embedding in RAG used as an index in this method can be decoded, and there is a risk that a search keyword or the contents of encrypted data may be guessed from reverse indexing. Therefore, it is difficult for this method to meet the requirement of the confidentiality of the index, which prevents the server from guessing the contents of the provided data from the index. Therefore, a simple combination of searchable encryption and RAG is difficult to meet the requirements such as the confidentiality of the search keyword and the confidentiality of the index.

As described above, it is difficult to improve search accuracy while ensuring the safety of information with RAG, searchable encryption, and their simple combination.

In addition, the technology that performs search by adjusting the priority of clusters for indexes classified using the feature of the data targets a keyword search, making advanced search for question sentences using natural sentences difficult. In addition, pivoting is used to determine the priority of clusters, but since it does not include the size information of clusters, it is highly dependent on the pivot position and may make incorrect decisions. Therefore, it is difficult to improve search accuracy while ensuring the safety of information even using this technology.

In addition, the technology that performs search using a confidential search using a semantic search and clustering also performs cluster filtering using pivoting, which may make incorrect decisions. Therefore, it is difficult to improve search accuracy while ensuring the safety of information even using this technology.

The disclosed technology has been made in view of the above, and an object thereof is to provide an information processing system and an information processing method that improve search accuracy while ensuring the safety of information.

### SUMMARY

According to an aspect of an embodiment, an information processing system includes, a provider terminal apparatus, a searcher terminal apparatus, and an information search server. The provider terminal apparatus executes a process to vectorize a plurality of pieces of provided data as an information search target and to obtain a plurality of first vectors, and to encrypt the plurality of obtained first vectors with homomorphic encryption to generate a plurality of indexes, and a process to generate a plurality of pieces of encrypted data obtained by encrypting the pieces of provided data, and to transmit a search table in which the indexes and the encrypted data are registered in correspondence with each other to the information search server. The searcher terminal apparatus executes a process to vectorize query information that is used for input search and to obtain a second vector, and to transmit a search query generated by encrypting the obtained second vector with the homomorphic encryption to the information search server, and a process to receive a similarity list as information on similarity between the index and the search query from the information search server, and to extract a similar index similar to the search query based on the similarity list. The information search server executes a process to receive the search table from the provider terminal apparatus, a process to receive the search query from the searcher terminal apparatus, a process of homomorphic operation according to the homomorphic encryption between the search query and each of the indexes registered in the search table, and a process to create a similarity list as information on similarity between the index and the search query based on the process of homomorphic operation, and to transmit the similarity list to the searcher terminal apparatus.

### BRIEF DESCRIPTION OF DRAWINGS

FIG. 1 is a configuration diagram of an information processing system according to an embodiment;
FIG. 2 is a block diagram of the information processing system according to the embodiment;
FIG. 3 is a diagram of an overview of a method for calculating an inner product in the case of a ciphertext's vector;
FIG. 4 is a diagram of an overview of the method for calculating an inner product in the case of the vector's ciphertext;
FIG. 5 is a diagram of an overview of cluster filtering;
FIG. 6 is a diagram of a comparison of a feature that can be used for cluster determination;
FIG. 7 is a diagram of an overview of a process from the transmission of a search query to the acquisition of encrypted cos similarity;
FIG. 8 is a diagram of an overview of a data search process;
FIG. 9 is a diagram of a process related to data registration;
FIG. 10 is a diagram of a process related to data search and inference;
FIG. 11 is a flowchart of a data registration process;
FIG. 12 is a flowchart of a question-and-answer process;
FIG. 13 is a diagram representing an effect when cluster filtering is used; and
FIG. 14 is a hardware configuration diagram of a computer.

### DESCRIPTION OF EMBODIMENT

Preferred embodiments of the present invention will be explained with reference to accompanying drawings. Note that the following embodiment does not limit the information processing system and the information processing method disclosed in the present application.

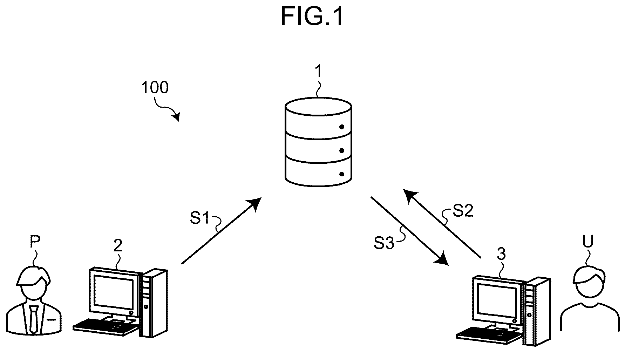

FIG. 1 is a configuration diagram of the information processing system according to the embodiment. This information processing system 100 receives a question from a data searcher U, searches for a document related to the question, and creates and outputs an answer to the question based on a search result.

As illustrated in FIG. 1, the information processing system 100 includes an information search server 1, a provider terminal apparatus 2, and a searcher terminal apparatus 3. The information search server 1, the provider terminal apparatus 2, and the searcher terminal apparatus 3 are connected to each other with a network to perform mutual communication.

The provider terminal apparatus 2 is an information processing apparatus used by a data provider P. The provider terminal apparatus 2 encrypts the data of documents possessed by the data provider P and registers the data in the information search server 1 (Step S1).

The searcher terminal apparatus 3 is an information processing apparatus used by the data searcher U. The searcher terminal apparatus 3 encrypts a question input by the data searcher U, and transmits the question to the information search server 1 (Step S2).

The information search server 1 performs search without decrypting the encrypted question, and finally transmits the encrypted data of a document related to the question to the searcher terminal apparatus 3 (Step S3). The data searcher U acquires an answer to the question using artificial intelligence (AI) or the like using a document obtained by decrypting the encrypted data of a document provided from the information search server 1.

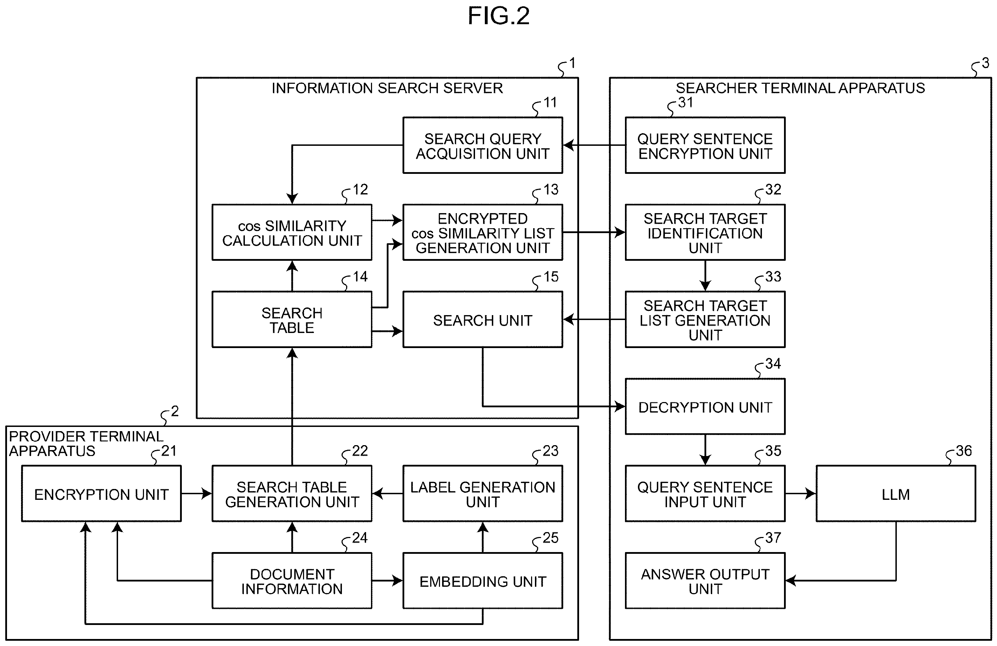

FIG. 2 is a block diagram of the information processing system according to the embodiment. Next, details of an information search process will be described with reference to FIG. 2.

The provider terminal apparatus 2 will be described. The provider terminal apparatus 2 includes an encryption unit 21, a search table generation unit 22, a label generation unit 23, document information 24, and an embedding unit 25. This provider terminal apparatus 2 corresponds to an example of a "first computer."

The document information 24 is the data of documents possessed by the data provider P. The document information 24 is data that has not been encrypted. The document information 24 exists for each of the documents possessed by the data provider P.

The embedding unit 25 performs embedding on each piece of the document information 24, converts it into a low-dimensional vector, and generates a vector of each piece of the document information 24. The length of this vector varies depending on a model on which embedding is performed. The embedding unit 25 outputs the vector of each piece of the document information 24 to the label generation unit 23. The embedding unit 25 outputs the vector of each piece of the document information 24 to the encryption unit 21.

The document information 24 corresponds to an example of "provided data." That is, the embedding unit 25 vectorizes a plurality of pieces of provided data as an information search target.

The label generation unit 23 receives input of the vector of each piece of the document information 24 from the embedding unit 25. Next, the label generation unit 23 reduces the dimension of the vectors by principal component analysis (PCA) or the like, and clusters the vectors the dimension of which has been reduced. Next, the label generation unit 23 generates a label for each cluster to label each vector. The label generation unit 23 then outputs information on the label assigned to the vector of each piece of the document information 24 to the search table generation unit 22.

The cluster of the vectors can also be said to be the cluster of the document information 24. Therefore, in the following, this cluster is treated as the cluster of the document information 24. That is, the label generation unit 23 executes a clustering process to classify the document information 24, which is a plurality of pieces of provided data, into a plurality of clusters. More specifically, the label generation unit 23 generates a plurality of clusters by clustering a plurality of vectors.

The encryption unit 21 can perform both encryption using fully homomorphic encryption (FHE) and encryption using advanced encryption standard (AES). Fully homomorphic encryption is one of homomorphic encryption (HE).

Here, homomorphic encryption will be described. Homomorphic encryption is an encryption scheme having the following properties. One is the property that the result of adding two encrypted real numbers can be considered to be equivalent to the result of adding two real numbers and then encrypting them. The other property is that the result of multiplying two encrypted real numbers can be considered to be equivalent to the result of multiplying two real numbers and then encrypting them. In particular, homomorphic encryption in which addition and multiplication are unlimitedly calculable is called fully homomorphic encryption. In the present embodiment, since real numbers are handled as input values, the encryption unit 21 uses fully homomorphic encryption of the Cheon Kim Kim Song (CKKS) scheme.

Here, homomorphic encryption enables any calculation by a combination of addition and multiplication. For example, the calculation of an inner product is a combination of multiplication and addition, and can thus be calculated with homomorphic encryption. Since the inner product can be calculated if one or more times of multiplication is possible, the information processing system 100 according to the present embodiment, not limited to fully homomorphic encryption, but can use another homomorphic encryption that enables one or more times of multiplication. For example, the information processing system 100 can use somewhat homomorphic encryption, which is homomorphic encryption with a limited number of times of multiplication.

The encryption unit 21 generates an FHE encryption key, which is a key for use in encryption with fully homomorphic encryption, and an FHE decryption key and an AES common key, which are keys for use in decryption with fully homomorphic encryption. The encryption unit 21 encrypts each piece of the document information 24 with the FHE encryption key. In the following, the encrypted document information 24 is referred to as "encrypted data."

The encryption unit 21 receives input of the vector of each piece of the document information 24 from the embedding unit 25. The encryption unit 21 then encrypts the vector of each piece of the document information 24 using the FHE encryption key to generate an index of the document information 24. Thus, the encryption unit 21 encrypts a plurality of vectors generated by the embedding unit 25 with homomorphic encryption to generate a plurality of indexes.

The encryption unit 21 then outputs the encrypted data and the indexes of each piece of the document information 24 to the search table generation unit 22. Here, since there is a one-to-one correspondence between the index and the vector of each piece of the document information 24, the cluster of the document information 24 corresponds to the cluster of the index.

The search table generation unit 22 assigns identification information to each piece of the document information 24. The search table generation unit 22 receives input of information on the label assigned to the vector of each piece of the document information 24 from the label generation unit 23. The search table generation unit 22 receives input of the encrypted data and the index of each piece of the document information 24 from the encryption unit 21.

The search table generation unit 22 generates a search table 14 in which the identification information of the document information 24 and each encrypted data, index, and label are registered in correspondence with each other. Then, the search table generation unit 22 transmits the generated search table 14 to the information search server 1, and registers it therein.

Next, the information search server 1 will be described. As illustrated in FIG. 2, the information search server 1 includes a search query acquisition unit 11, a cos similarity calculation unit 12, an encrypted cos similarity list generation unit 13, the search table 14, and a search unit 15. This information search server 1 corresponds to an example of a "third computer."

The search table 14 is registered to the information search server 1 from the search table generation unit 22 of the provider terminal apparatus 2. That is, the information search server 1 includes the search table 14 in which a plurality of indexes and the encrypted data are registered in correspondence with each other.

The search query acquisition unit 11 receives a search query obtained by encrypting a query sentence of a question by the data searcher U from the searcher terminal apparatus 3. Here, the search query is encrypted with fully homomorphic encryption using the FHE encryption key generated by the encryption unit 21. The search query acquisition unit 11 then outputs the acquired search query to the cos similarity calculation unit 12.

The cos similarity calculation unit 12 receives input of the encrypted search query from the search query acquisition unit 11. Next, the cos similarity calculation unit 12 acquires the index of each piece of the document information 24 from the search table 14. The cos similarity calculation unit 12 then determines the inner product of the search query and the index of each piece of the document information 24, and generates an encrypted cos similarity, which is a ciphertext with fully homomorphic encryption of a cos similarity between the search query and the index of each piece of the document information 24.

Here, the index can be a ciphertext's vector, in which each element of the vector of the document information 24 is encrypted or a vector's ciphertext, in which the entire vector of the document information 24 is encrypted. As described below, in the information processing system 100 according to the present embodiment, either the ciphertext's vector or the vector's ciphertext can be used as the index.

The method for calculating the inner product using homomorphic encryption is different for the case of the ciphertext's vector, in which each element of the vector is encrypted, as described below. However, there is no difference in the calculation result for either case. A description will be given with a vector with a length of n before encryption being v1 = (v11, v12, ..., v1N) and v1 = (v11, v12, ..., v1N). An encrypted vector v is denoted by E(v).

The following describes a method for calculating the inner product in the case of the ciphertext's vector. Here, let <v1> and <v2> be the ciphertext's vector of v1 and v2, respectively. The inner product IP(<v1>, <v2>) of the ciphertext's vector is calculated as IP(<v1>, <v2>) = SUM(MULT(E(v11), E(v21)), MULT(E(v12), E(v22)), ..., MULT(E(v1N), E(v2N))). where SUM(x1, x2, ...) = ADD(x1, ADD(x2, ...)). This inner product IP(<v1>, <v2>) is compounded to calculate E(v1, v2) = v11v21 + v12v22 + ... + v1Nv2N.

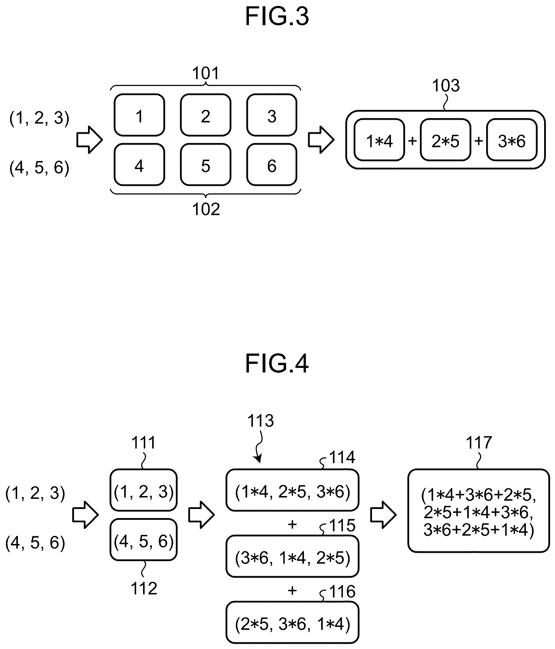

FIG. 3 is a diagram of an overview of the method for calculating the inner product in the case of the ciphertext's vector. For example, consider the inner product of the ciphertext's vector of a vector (1, 2, 3) and a vector (4, 5, 6). In this case, a ciphertext's vector 101 of (1, 2, 3) contains 1, 2, and 3 each encrypted. A ciphertext's vector 102 of (4, 5, 6) contains 4, 5, and 6 each encrypted. An inner product 103 of the ciphertext's vector 101 and the ciphertext's vector 102 is then the sum of the inner product of the encrypted 1 and the encrypted 4, the inner product of the encrypted 2 and the encrypted 5, and the inner product of the encrypted 3 and the encrypted 6.

Next, a method for calculating the inner product in the case of the vector's ciphertext will be described. Here, E(v1) = E((v11, v12, ..., v1N)). E(v2) = E((v21, v22, ..., v2N)). ADD(E(v1), E(v2)) = E((v11 + v21, v12 + v22, ..., v1N + v2N)) is defined. HADAMARD(E(v1), E(v2)) = E((v11v21, v12v22, ..., v1Nv2N)) is defined. ROT(E(v1)) = E((v1N, v11, v12, ..., v1N-1)) is defined.

Furthermore, w1 = HADAMARD(E(v1), E(v2)), w2 = HADAMARD(ROT(E(v1)), ROT(E(v2))), w3 = HADAMARD(ROT(ROT(E(v1)), ROT(ROT(E(v2))), .... In this case, the inner product of the vector's ciphertext IP(E(v1), E(v2)) = SUM(w1, w2, ..., wN). This inner product IP(<v1>, <v2>) is then compounded to calculate E(v1, v2) = v11v21 + v12v22 + ... + v1Nv2N for each element.

FIG. 4 is a diagram of an overview of the method for calculating the inner product in the case of the vector's ciphertext. Again, consider the inner product of the ciphertexts of a vector (1, 2, 3) and a (4, 5, 6) as an example. In this case, a vector's ciphertext 111 of (1, 2, 3) is (1, 2, 3) encrypted together. A vector's ciphertext 112 of (4, 5, 6) is (4, 5, 6) encrypted together. An inner product 113 of the vector's ciphertext 111 and the vector's ciphertext 112 is then as illustrated in FIG. 4. That is, the inner product 113 is the sum of the inner product of a vector's ciphertext 114 of (1*4, 2*5, 3*6), a vector's ciphertext 115 of (3*6, 1*4, 2*5), and a vector's ciphertext 116 of (2*5, 3*6, 1*4). In an inner product 117, which is further calculated, the inner product 103 of the ciphertext's vector 101 and the ciphertext's vector 102 in FIG. 3 is calculated for each element.

Here, the cos similarity calculation unit 12 corresponds to an example of a "similarity calculation unit." The inner product here corresponds to an example of "homomorphic operation according to homomorphic encryption." The cos similarity calculation unit 12 receives the search query from the searcher terminal apparatus 3, executes homomorphic operation between the search query and each of the indexes, and transmits an operation result to the searcher terminal apparatus 3. In detail, the cos similarity calculation unit 12 performs homomorphic operation according to homomorphic encryption between the search query and each of the indexes registered in the search table 14.

Return to FIG. 2 to continue the description. The cos similarity calculation unit 12 outputs the encrypted cos similarity, which is a ciphertext with fully homomorphic encryption of the cos similarity between the search query and the encrypted index of each piece of the document information 24, to the encrypted cos similarity list generation unit 13.

The encrypted cos similarity list generation unit 13 receives input of the encrypted cos similarity of each piece of the document information 24 from the cos similarity calculation unit 12. The encrypted cos similarity list generation unit 13 acquires an identifier and information on a label of each piece of the document information 24 from the search table 14.

Next, the encrypted cos similarity list generation unit 13 generates the encrypted cos similarity list, which is a table in which the encrypted cos similarity and the label are corresponded with the identifier of each piece of the document information 24. The encrypted cos similarity list generation unit 13 then transmits the generated encrypted cos similarity list to the searcher terminal apparatus 3.

The search unit 15 receives a search request based on a search target list in which the identifier of the document information 24 as a search target is registered from the searcher terminal apparatus 3. The search unit 15 then refers to the search table 14 to search for the encrypted data of the document information 24 corresponding to the identifier registered in the search target list. The search unit 15 then transmits the encrypted data obtained by the search to the searcher terminal apparatus 3. Thus, the search unit 15 extracts the encrypted data based on the identifier registered in the searcher target list received from the searcher terminal apparatus 3, and transmits the encrypted data to the searcher terminal apparatus 3.

Next, the searcher terminal apparatus 3 will be described. As illustrated in FIG. 2, the searcher terminal apparatus 3 includes a query sentence encryption unit 31, a search target identification unit 32, a search target list generation unit 33, a decryption unit 34, a query sentence input unit 35, an LLM 36, and an answer output unit 37. This searcher terminal apparatus 3 corresponds to an example of a "second computer."

The data searcher U receives search permission from the data provider P to receive the FHE encryption key, the FHE decryption key, and the AES common key from the data provider P via a secure communication channel. The data searcher U then stores them in the searcher terminal apparatus 3.

The query sentence encryption unit 31 acquires a query sentence input from the data searcher U. Next, the query sentence encryption unit 31 vectorizes the query sentence with embedding. Next, the query sentence encryption unit 31 encrypts the vector of the query sentence with fully homomorphic encryption using the FHE encryption key acquired from the data provider P to generate a search query. The query sentence encryption unit 31 transmits the search query to the search query acquisition unit 11 of the information search server 1. Thus, the query sentence encryption unit 31 vectorizes the input query information and encrypts the resulting vector with homomorphic encryption to generate the search query.

The search target identification unit 32 receives the encrypted cos similarity list from the encrypted cos similarity list generation unit 13 of the information search server 1. Next, the search target identification unit 32 performs fully homomorphic encryption for the encrypted cos similarity registered in the encrypted cos similarity list to calculate a sum for each label.

Next, the search target identification unit 32 performs fully homomorphic decryption on each sum of the encrypted cos similarities for each label using the FHE decryption key to acquire the value of the sum of the cos similarities. In the following, the value of the sum of the cos similarities is referred to simply as the "value of the sum." Next, the search target identification unit 32 checks the maximum value of the value of the sum. Then, the search target identification unit 32 determines whether the maximum value of the value of the sum is a predetermined search threshold or more.

If the maximum value of the value of the sum is less than the search threshold, the search target identification unit 32 determines that the document information 24 corresponding to the query sentence of the search query, or the encrypted data of the document information 24 corresponding to the query sentence is not registered in the information search server 1. Then, the search target identification unit 32 notifies the data searcher U of the fact by, for example, displaying on a monitor, not illustrated, the fact that the document information 24 corresponding to the query sentence is not registered in the information search server 1.

In contrast, if the maximum value of the sum is the search threshold or more, the search target identification unit 32 selects a label with the maximum value of the value of the sum. Here, the label selected by the search target identification unit 32 is considered to be the label of the cluster containing many vectors matching the query sentence. In other words, the selection of the label can be said to be the selection of the cluster containing many vectors matching the query sentence. Thus, the search target identification unit 32 performs cluster filtering to select the cluster having a high possibility of containing much document information 24 matching the query sentence out of the clusters of the document information 24, using the value of the sum as a feature of the cluster.

Here, the sum of the encrypted cos similarities corresponds to an example of a "certain operation." The value of the sum of the cos similarities corresponds to an example of a "certain feature." In other words, the search target identification unit 32 performs cluster filtering to select a specific cluster out of a plurality of clusters based on the certain feature of each of the clusters. In more detail, the search target identification unit 32 performs the certain operation using an operation result of a homomorphic operation between each of the indexes based on the provided data contained in each cluster and the search query. Then, the search target identification unit 32 selects a specific cluster by using the information obtained by decrypting the result of the certain operation as the certain feature of each of the clusters.

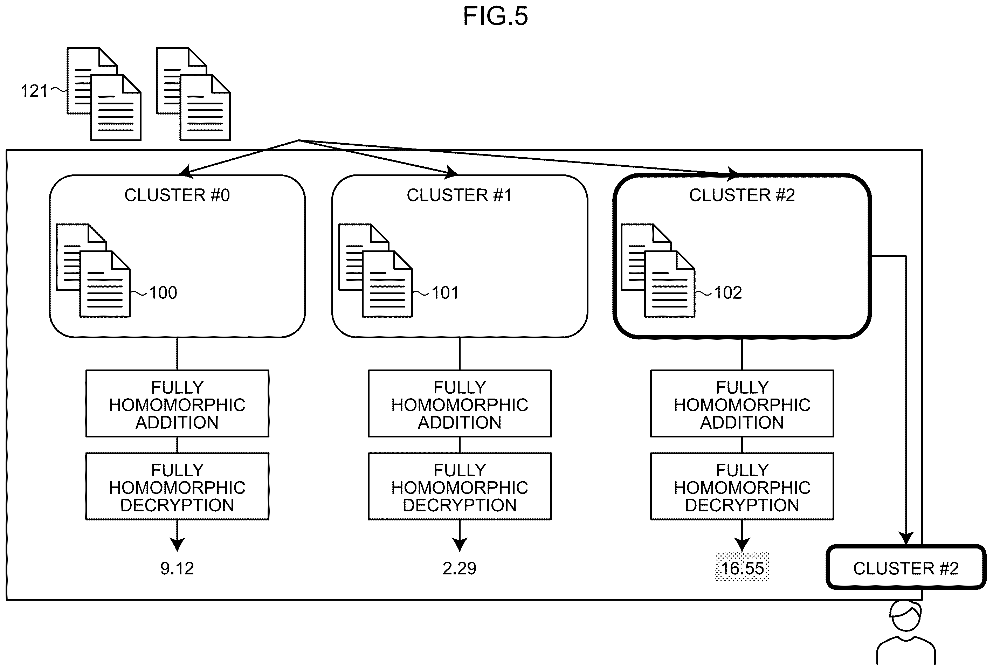

FIG. 5 is a diagram of an overview of the cluster filtering. The search target identification unit 32 acquires an encrypted cos similarity 121 from the information search server 1. Here, the cos similarity is a value of -1.0 or more and 1.0 or less, in which a larger number means a higher similarity.

Next, the search target identification unit 32 classifies the encrypted cos similarities 121 for each label set by the data provider P. This section describes a case in which the search target identification unit 32 classifies the encrypted cos similarities 121 into clusters #0 to #2.

The search target identification unit 32 determines the sum for each of the clusters #0 to #2 with fully homomorphic addition, and decrypts the sum with fully homomorphic decryption to calculate the value of the sum. Here, the search target identification unit 32 calculates the value of the sum of the cluster #0 as 9.12, calculates the value of the sum of the cluster #1 as 2.29, and calculates the value of the sum of the cluster #2 as 16.55.

Here, E(v1) + E(v2) = E(v1 + v2) because fully homomorphic encryption is used. Therefore, the value of the sum obtained by decrypting the sum of the encrypted cos similarities corresponds to the value of the sum of the cos similarities of each of the indexes contained in the cluster. Thus, the value of the sum of the cos similarities being large across the cluster in a particular cluster is considered that the particular cluster is a cluster containing many pieces of the document information 24 matching the query sentence.

Therefore, the search target identification unit 32 selects the label of the cluster #2 the value of the sum of which is 16.55, which is the maximum value. This enables the search target identification unit 32 to provide the data searcher U with information limited to the cluster #2, which contains the most indexes matching the query sentence.

Originally, the cluster with the highest similarity among the clusters of the document information 24 can be determined by comparing the values of the cos similarities contained in each of the clusters, but since homomorphic decryption has high decryption cost, it is desirable to reduce the number of times of decryption. Therefore, by using a feature, which is the sum of the encrypted cos similarities, clusters can be determined without decrypting each encrypted cos similarity, and since only decryption is needed for the selected cluster, the number of times of decryption can be reduced.

Here, in the present embodiment, the search target identification unit 32 performs cluster determination using the value of the sum of the cos similarities as the feature, but the feature used is not limited to this embodiment. For example, the search target identification unit 32 can also use the average value or variance of the cos similarities as the feature. In addition, the search target identification unit 32 may also combine a plurality of features to be used for cluster determination.

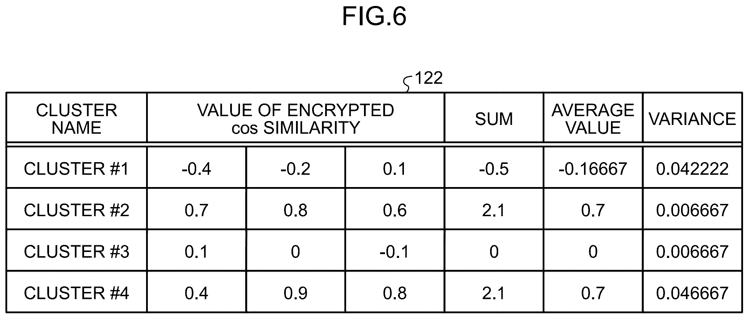

Here, the nature of the feature for use in cluster determination will be described. FIG. 6 is a diagram of a comparison of features that can be used for cluster determination. Here, a case in which clusters #1 to #4 exist will be described. The values of the encrypted cos similarity and the respective features contained in the clusters #1 to #4 are the values represented in Table 122 in FIG. 6.

For example, in addition to the sum, an average value and a variance can be used for cluster determination. Here, the information processing system 100 according to the present embodiment is needed to identify a cluster with many elements with high values for a set of the cos similarities that takes values from -1.0 to 1.0.

A case in which the sum of the cos similarities is used as a feature will be described. In a fully homomorphic operation, addition can be calculated faster than multiplication. Therefore, the value of the sum can be calculated fast, and efficient search is possible by using the sum of the cos similarities as the feature.

Next, a case in which the average value of the cos similarities is used as a feature will be described. In the operation of the average value of the cos similarities, since the majority of the operation is fully homomorphic addition, the speed of the operation is not so different from that of using the sum of the cos similarities as the feature, and efficient search can be performed. However, since there is a lot of data that is not related to the search query in the document information 24, the average value of the cos similarities may reflect a smaller overall feature due to its nature.

Next, a case in which the variance of the cos similarities is used as a feature will be described. When the variance of the cos similarities is used as a feature, the variation of the data can be checked. In conjunction with the average value, a selection method such as selecting a cluster with a larger value of variance in order to select a cluster containing many cos similarities closer to 1.0 when the average values are the same may also be used.

Return to FIG. 2 to continue the description. The search target identification unit 32 decrypts each of the encrypted cos similarities to which the selected label is assigned using the FHE decryption key to acquire each of the cos similarities. In other words, the search target identification unit 32 acquires the cos similarity from each of the encrypted cos similarities contained in the selected cluster. Next, the search target identification unit 32 identifies the identification information of the document information 24 corresponding to the top 10 similarities among the acquired cos similarities from the encrypted cos similarity list. The search target identification unit 32 then outputs the identification information of the 10 pieces of identified document information 24 to the search target list generation unit 33. Here, the number of the identification information of the document information 24 to be identified is not limited to 10.

Here, the document information 24 belonging to the selected cluster corresponds to an example of "first provided data belonging to a specific cluster." The index having the encrypted cos similarity contained in the selected cluster corresponds to an example of "first indexes." Then, the index of the top certain number of cos similarities extracted from the cos similarities acquired from the encrypted cos similarities belonging to the selected cluster corresponds to an example of a "similar index."

In other words, it can be said that the search target identification unit 32 extracts the similar index similar to the search query out of the indexes with the homomorphic operation according to homomorphic encryption. It can also be said that the search target identification unit 32 extracts the similar index out of the first indexes based on the first provided data belonging to a specific cluster. In more detail, it can be said that the search target identification unit 32 extracts the similar index similar to the search query based on the information decrypted from the operation result received from the information search server 1. Furthermore, the search target identification unit 32 extracts the similar index based on the information obtained by decrypting the operation result of the homomorphic operation between each of the first indexes and the search query.

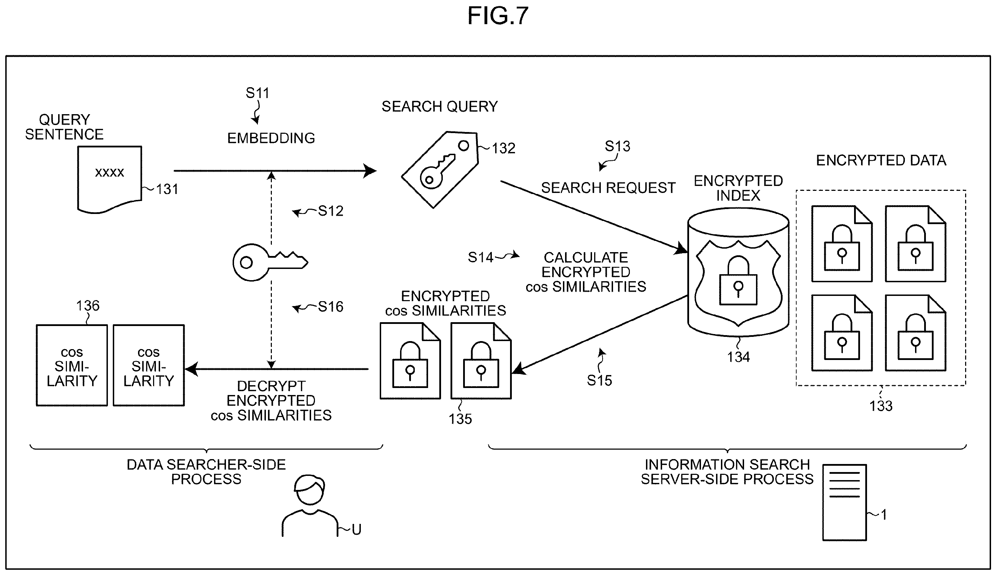

The following integrally describes an overview of the process from the transmission of the search query to the transmission of the encrypted cos similarity list. FIG. 7 is a diagram of an overview of the process from the transmission of the search query to the acquisition of the encrypted cos similarities.

The data searcher-side process in FIG. 7 is a process executed by the data searcher U using the searcher terminal apparatus 3. The information search server-side process is a process executed by the information search server 1.

The data searcher U inputs a query sentence 131 to the searcher terminal apparatus 3. The query sentence encryption unit 31 of the searcher terminal apparatus 3 performs embedding on the query sentence 131 to vectorize it (Step S11). Next, the query sentence encryption unit 31 encrypts the vector of the query sentence 131 with fully homomorphic encryption using the FHE encryption key to generate a search query 132 (Step S12). The query sentence encryption unit 31 then transmits a search request based on the generated search query 132 to the information search server 1 (Step S13).

The search query acquisition unit 11 of the information search server 1 receives the search query 132 from the query sentence encryption unit 31 of the searcher terminal apparatus 3. The information search server 1 holds the search table 14 containing encrypted data 133 and an index 134 in which the document information 24 is encrypted. The cos similarity calculation unit 12 of the information search server 1 calculates the inner product of the search query 132 and the index 134 to calculate encrypted cos similarities with the search query 132 for each index of the document information 24 (Step S14). Next, the encrypted cos similarity list generation unit 13 of the information search server 1 generates an encrypted cos similarity list in which encrypted cos similarities 135 are registered, and transmits the encrypted cos similarity list to the searcher terminal apparatus 3 (Step S15).

The search target identification unit 32 of the searcher terminal apparatus 3 receives the encrypted cos similarity list in which the encrypted cos similarities 135 are registered. Then, the search target identification unit 32 performs cluster filtering to select a cluster. The search target identification unit 32 then performs decryption of fully homomorphic encryption on the encrypted cos similarities contained in the selected cluster using the FHE decryption key to acquire cos similarities 136 (Step S16). The search target identification unit 32 then provides the data searcher U with the top 10 cos similarities 136.

Return to FIG. 2 to continue the description. The search target list generation unit 33 receives input of the identification information of 10 pieces of document information 24 from the search target identification unit 32. Then, the search target list generation unit 33 generates a search target list by adding dummy identification information to the identification information of the 10 pieces of document information 24. Here, the search target list generation unit 33 adds the dummy identification information to the search target list, and can thereby avoid frequency analysis for the search of the document information 24 by the information search server 1.

The search target list generation unit 33 then transmits a search request based on the search target list to the search unit 15 of the information search server 1. Thus, the search target list generation unit 33 transmits the identification information of first encrypted data corresponding to the similar index extracted by the search target identification unit 32 to the information search server 1.

The decryption unit 34 receives the encrypted data of one or more pieces of document information 24, which is a search result based on the search target list, from the search unit 15 of the information search server 1. The decryption unit 34 then decrypts each of the encrypted data using the AES common key to acquire the document information 24 corresponding to each. The decryption unit 34 then outputs the acquired document information 24 to the query sentence input unit 35.

Here, the encrypted data of the document information 24, which is the search result of the information search server 1, corresponds to an example of the "first encrypted data." The document information 24 obtained by decrypting the encrypted data received by the decryption unit 34 corresponds to an example of "second provided data." In other words, the decryption unit 34 decrypts the first encrypted data received from the information search server 1 to acquire the second provided data.

The query sentence input unit 35 receives input of the document information 24 obtained from the search by the information search server 1 from the decryption unit 34. Next, the query sentence input unit 35 inputs the query sentence input from the data searcher U with the document information 24 added as knowledge to the LLM 36.

The LLM 36 receives input of the query sentence with the document information 24 added as knowledge from the query sentence input unit 35. The LLM 36 then executes inference on the query sentence based on the document information 24 and the like. The LLM 36 then outputs an inference result to the answer output unit 37. Thus, the LLM 36 performs inference based on the second provided data and query information.

The answer output unit 37 acquires an answer to the query sentence, which is the inference result, from the LLM 36. The answer output unit 37 then provides the data searcher U with the answer to the input query sentence by, for example, displaying the answer on a monitor, not illustrated.

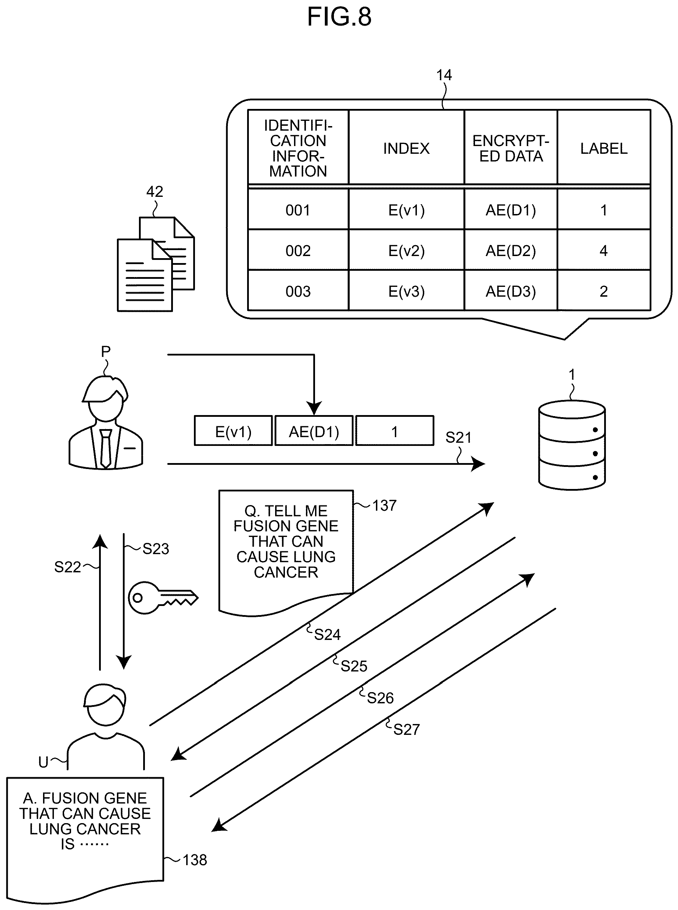

FIG. 8 is a diagram of an overview of a data search process. Next, an overview of the data search process will be integrally described with reference to FIG. 8.

The data provider P causes the provider terminal apparatus 2 to perform the following process. The embedding unit 25 of the provider terminal apparatus 2 vectorizes the document information 24 with embedding. Next, the label generation unit 23 of the provider terminal apparatus 2 reduces the dimension of the vectors and clusters them to generate a label for each cluster and assigns a label to each of the vectors. Next, the encryption unit 21 of the provider terminal apparatus 2 encrypts the document information 24 with the AES common key to generate encrypted data. The encryption unit 21 of the provider terminal apparatus 2 encrypts the vector of the document information 24 with the FHE encryption key to generate an index. Next, the search table generation unit 22 of the provider terminal apparatus 2 assigns an identifier to each piece of the document information 24, and generates the search table 14 in which the index, the encrypted data, and the label are corresponded with the assigned identifier. In FIG. 7, the index obtained by encrypting the vector with the FHE encryption key is denoted as E(v), and the encrypted data obtained by encrypting the document information 24 with the AES common key is denoted as AE(D1). The data provider P then transmits the search table 14 to the information search server 1 using the provider terminal apparatus 2 (Step S21). The information search server 1 thereby acquires the search table 14 in which the correspondence between the identifier, the index, the encrypted data, and the label of each piece of the document information 24 is registered. In this case, both the index and the encrypted data are encrypted, and the contents of various information about the document information 24 are kept secret from the information search server 1.

The data searcher U applies for search permission to the data provider P (Step S22). The data searcher U then receives the search permission from the data provider P to receive the FHE encryption key, the FHE decryption key, and the AES common key (Step S23).

The data searcher U then causes the searcher terminal apparatus 3 to perform the following process. The query sentence encryption unit 31 of the searcher terminal apparatus 3 vectorizes a query sentence 137 with embedding, and encrypts the vector with the FHE encryption key to generate a search query. The query sentence encryption unit 31 then transmits the search query to the information search server 1 to request a search (Step S24).

The cos similarity calculation unit 12 of the information search server 1 calculates the encrypted cos similarity between the search query acquired by the search query acquisition unit 11 and each of the indexes registered in the search table 14 by inner product based on fully homomorphic encryption. Then, the encrypted cos similarity list generation unit 13 of the information search server 1 generates an encrypted cos similarity list in which the identification information and the information on the label are corresponded with the encrypted cos similarity, and transmits the encrypted cos similarity list to the searcher terminal apparatus 3 (Step S25). During this time, all of the search query, the index, and the encrypted data are encrypted, and the calculation of the encrypted cos similarity is also calculated while encrypted with fully homomorphic encryption. Therefore, the contents of various information including the value of the encrypted cos similarity are kept secret from the information search server 1.

The search target identification unit 32 of the searcher terminal apparatus 3 acquires the encrypted cos similarity list transmitted from the information search server 1. Then, the search target identification unit 32 of the searcher terminal apparatus 3 calculates the sum of the encrypted cos similarities registered in the encrypted cos similarity list for each label. Next, the search target identification unit 32 decrypts the sum for each label using the FHE decryption key to acquire the value of the sum of each label. Next, the search target identification unit 32 selects a label with the largest value of the sum, and performs cluster filtering to narrow down the clusters to be used for the search. Next, the search target identification unit 32 decrypts the encrypted cos similarity corresponding to the selected label using the FHE decryption key, and identifies the identification information of the document information 24 corresponding to the top 10 cos similarity as the search target. The search target list generation unit 33 generates a search target list by adding dummy identification information to the identification information of the document information 24 corresponding to the top 10 cos similarities. The search target list generation unit 33 then transmits the search target list to the information search server 1 to request a search (Step S26).

The search unit 15 of the information search server 1 receives the search target list from the searcher terminal apparatus 3. The search unit 15 then searches the search table 14 using the identification information registered in the search target list to extract the encrypted data corresponding to those pieces of identification information. The search unit 15 then transmits the extracted encrypted data to the searcher terminal apparatus 3 (Step S27). During this time, the information search server 1 performs a search using the encrypted index, extracts the encrypted encrypted data, and transmits the encrypted encrypted data to the searcher terminal apparatus 3, and thus the contents of various information including the index and the encrypted data are kept secret from the information search server 1.

The decryption unit 34 of the searcher terminal apparatus 3 decrypts the encrypted data received from the information search server 1 using the AES common key to acquire the document information 24. Then, the query sentence input unit 35 of the searcher terminal apparatus 3 inputs the query sentence 137 with the acquired document information 24 added as knowledge to the LLM 36. The answer output unit 37 provides the data searcher U with an answer 138 to the query sentence 137 output from the LLM 36.

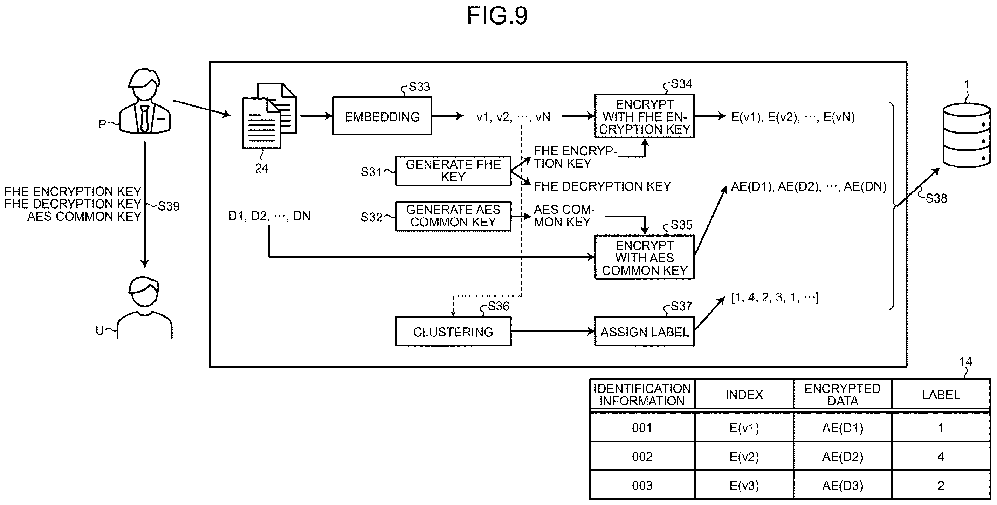

FIG. 9 is a diagram of a process related to data registration. Next, the process related to data registration will be described in detail again with reference to FIG. 9.

The provider terminal apparatus 2 holds the document information 24 entered by the data provider P. The encryption unit 21 executes an FHE key generation process to generate the FHE encryption key and the FHE decryption key (Step S31). The encryption unit 21 also executes an AES common key generation process to generate the AES common key (Step S32).

The embedding unit 25 vectorizes the document information 24 with embedding to generate vectors v1 to vN (Step S33).

The encryption unit 21 assigns an identifier to each piece of the document information 24. Furthermore, the encryption unit 21 encrypts the vectors v1 to vN with fully homomorphic encryption using the FHE encryption key to generate indexes E(v1) to E(vN) (Step S34).

The encryption unit 21 encrypts each piece of the document information 24 with the AES common key to generate encrypted data AE(D1) to AE(DN) (Step S35).

The label generation unit 23 reduces the dimension of the vectors v1 to vN and then clusters them (Step S36). The label generation unit 23 then generates a label for each of the clusters, and assigns a label to each of the vectors v1 to vN belonging to each cluster (Step S37). For example, in FIG. 9, the label generation unit 23 assigns labels such as 1, 4, 2, 3, 1, ... in order from v1.

The search table generation unit 22 generates the search table 14 in which the indexes E(v1) to E(vN), the encrypted data AE(D1) to AE(DN), and the labels are registered in correspondence with the identifiers for each piece of the document information 24. Then, the search table generation unit 22 registers the generated search table 14 in the information search server 1 (Step S38).

The data provider P receives an application for search permission from the data searcher U, and permits the search and provides the data searcher U with the FHE encryption key, the FHE decryption key, and the AES common key via a secure communication channel (Step S39).

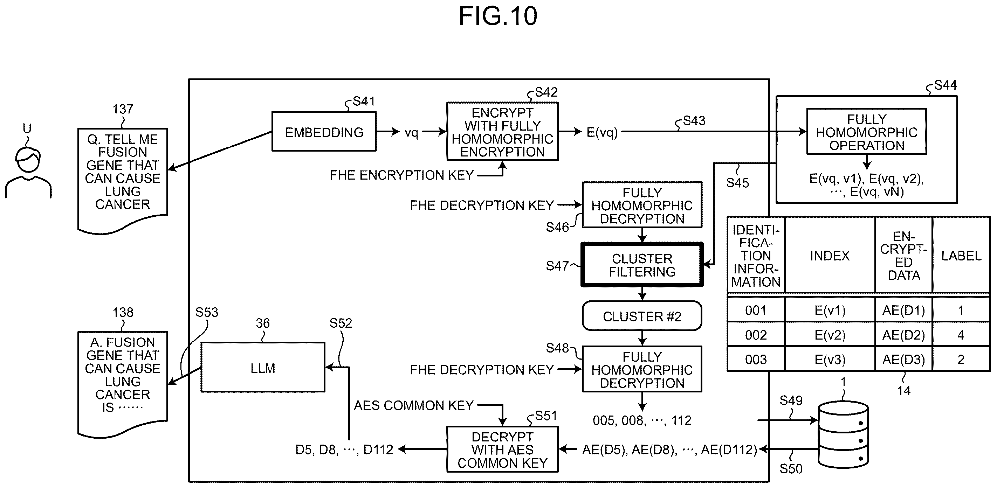

FIG. 10 is a diagram of a process related to data search and inference. Next, the process related to data search and inference will be described in detail again with reference to FIG. 10.

The query sentence encryption unit 31 of the searcher terminal apparatus 3 acquires the query sentence 137 input from the data searcher U. The query sentence encryption unit 31 then vectorizes the query sentence 137 with embedding to generate a vector vq (Step S41).

Next, the query sentence encryption unit 31 encrypts the vector vq with the FHE encryption key to generate a search query E(vq) (Step S42). Then, the query sentence encryption unit 31 transmits the search query E(vq) to the information search server 1 to perform a search request (Step S43).

The search query acquisition unit 11 of the information search server 1 receives the search query E(vq), and receives the search request. The cos similarity calculation unit 12 calculates the encrypted cos similarity between the search query E(vq) acquired by the search query acquisition unit 11 and each of the indexes E(v1) to E(vN) registered in the search table 14 by inner product based on fully homomorphic encryption. The cos similarity calculation unit 12 thereby calculates encrypted cos similarities E(vq, v1), E(vq, v2), ..., and E(vq, vN) (Step S44).

The encrypted cos similarity list generation unit 13 generates an encrypted cos similarity list in which the identification information and the information on the label are corresponded with the encrypted cos similarities E(vq, v1), E(vq, v2), ..., and E(vq, vN) calculated by the cos similarity calculation unit 12. Then, the encrypted cos similarity list generation unit 13 transmits the encrypted cos similarity list to the searcher terminal apparatus 3 (Step S45).

The search target identification unit 32 of the searcher terminal apparatus 3 acquires the encrypted cos similarity list transmitted from the information search server 1. Then, the search target identification unit 32 calculates the sum of the encrypted cos similarities registered in the encrypted cos similarity list for each label. Next, the search target identification unit 32 decrypts the calculated sum of each label with fully homomorphic encryption using the FHE decryption key to obtain the value of the sum of each label (Step S46).

Next, the search target identification unit 32 selects the label with the largest value of the sum to perform cluster filtering (Step S47). For example, when the cluster corresponding to the label with the largest value of the sum is the cluster #2, the search target identification unit 32 will make the cluster #2 the search target.

Next, the search target identification unit 32 decrypts the encrypted cos similarity corresponding to the selected label with fully homomorphic decryption using the FHE decryption key. In this way, the search target identification unit 32 acquires all cos similarities contained in the cluster corresponding to the selected label. For example, the search target identification unit 32 acquires all cos similarities contained in the cluster #2. Then, the search target identification unit 32 identifies the identification information of the document information 24 corresponding to the top 10 cos similarities as the search target (Step S48). For example, the search target identification unit 32 identifies identification information 005, 008, ..., and 112 as the search target.

The search target list generation unit 33 generates a search target list by adding dummy identification information to the identification information of the document information 24 corresponding to the top 10 cos similarities. The search target list generation unit 33 then transmits the search target list to the information search server 1 to request a search (Step S49).

The search unit 15 of the information search server 1 receives the search target list from the searcher terminal apparatus 3. Then, the search unit 15 searches the search table 14 using the identification information registered in the search target list to extract encrypted data AE(D5), AE(D8), ..., and AE(D112) corresponding to those pieces of identification information. The search unit 15 then transmits the extracted encrypted data AE(D5), AE(D8), ..., and AE(D112) to the searcher terminal apparatus 3 (Step S50).

The decryption unit 34 of the searcher terminal apparatus 3 receives the encrypted data AE(D5), AE(D8), ..., and AE(D112) from the information search server 1 using the AES common key. Next, the decryption unit 34 decrypts the encrypted data AE(D5), AE(D8), ..., and AE(D112) to acquire the document information 24 denoted as D5, D8, ..., and D112 in FIG. 10 (Step S51).

Then, the query sentence input unit 35 of the searcher terminal apparatus 3 inputs the query sentence 137 with the acquired document information 24 added as knowledge to the LLM 36 (Step S52).

The answer output unit 37 of the searcher terminal apparatus 3 provides the data searcher U with the answer 138 to the query sentence 137 output from the LLM 36 (Step S53).

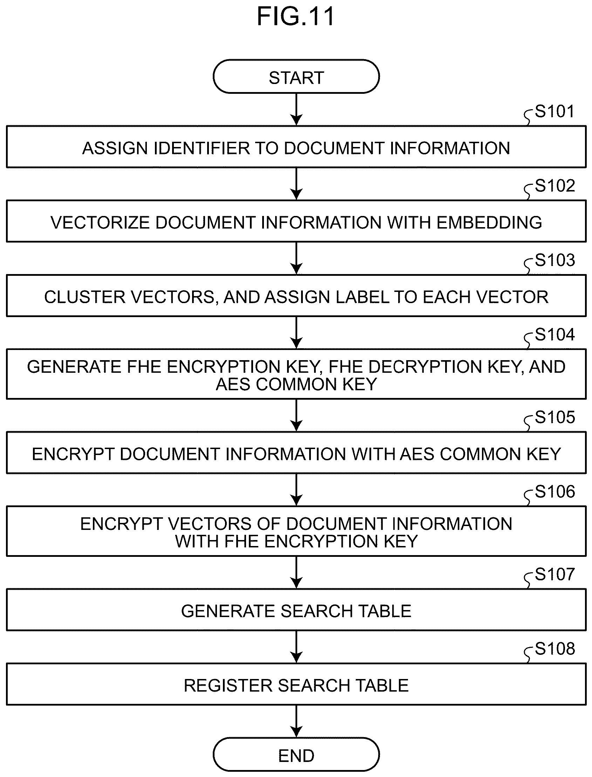

FIG. 11 is a flowchart of a data registration process. Next, a procedure of the data registration process by the provider terminal apparatus 2 will be described with reference to FIG. 11. Here, FIG. 11 illustrates the process in a different order than in FIG. 9 to make the procedure easier to understand, but the data registration process can also be processed in the order illustrated in FIG. 9.

The encryption unit 21 assigns an identifier to each piece of the document information 24 (Step S101).

The embedding unit 25 vectorizes the document information 24 with embedding to generate the vectors v1 to vN (Step S102).

The label generation unit 23 reduces the dimension of the vectors of the document information 24, and then clusters them. The label generation unit 23 then generates a label for each of the clusters, and assigns to each of the vectors the label of the cluster to which each vector belongs (Step S103).

The encryption unit 21 executes the FHE key generation process to generate the FHE encryption key and the FHE decryption key. The encryption unit 21 also executes the AES common key generation process to generate the AES common key (Step S104).

The encryption unit 21 encrypts each piece of the document information 24 with the AES common key to generate the encrypted data corresponding to each piece of the document information 24 (Step S105).

The encryption unit 21 encrypts the vectors of the document information 24 with fully homomorphic encryption using the FHE encryption key to generate the indexes (Step S106).

The search table generation unit 22 generates the search table 14 in which the index, the encrypted data, and the label are registered in correspondence with the identifier for each piece of the document information 24 (Step S107).

Next, the search table generation unit 22 registers the generated search table 14 in the information search server 1 (Step S108).

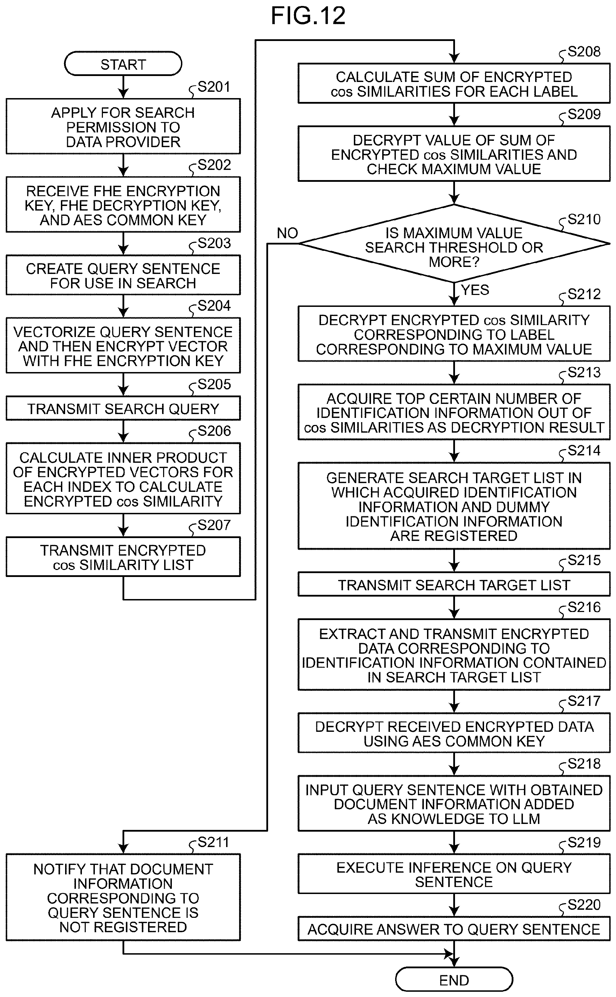

FIG. 12 is a flowchart of a question-and-answer process. Next, a procedure of the question-and-answer process by the searcher terminal apparatus 3 and the information search server 1 will be described with reference to FIG. 12.

The data searcher U applies for search permission to the data provider P (Step S201).

The data searcher U receives search permission from the data provider P to receive the FHE encryption key, the FHE decryption key, and the AES common key via a secure communication channel (Step S202).

The data searcher U creates a query sentence for use in the search using the searcher terminal apparatus 3 (Step S203). The query sentence encryption unit 31 of the searcher terminal apparatus 3 acquires the query sentence created by the data searcher U.

Next, the query sentence encryption unit 31 vectorizes the query sentence 137 with embedding to generate a vector of the query sentence. The query sentence encryption unit 31 then encrypts the vector with the FHE encryption key to generate a search query (Step S204).

Next, the query sentence encryption unit 31 transmits the search query to the information search server 1 to perform a search request (Step S205).

The cos similarity calculation unit 12 of the information search server 1 calculates the inner product of encrypted vectors for each index registered in the search table 14 using the search query received by the search query acquisition unit 11 to calculate the encrypted cos similarity (Step S206).

The encrypted cos similarity list generation unit 13 generates the encrypted cos similarity list in which the identification information and the information on the label are corresponded with the encrypted cos similarity E calculated by the cos similarity calculation unit 12. Then, the encrypted cos similarity list generation unit 13 transmits the encrypted cos similarity list to the searcher terminal apparatus 3 (Step S207).

The search target identification unit 32 of the searcher terminal apparatus 3 calculates the sum of the encrypted cos similarities registered in the encrypted cos similarity list transmitted from the information search server 1 for each label (Step S208).

Next, the search target identification unit 32 decrypts the calculated sum of each label with fully homomorphic decryption using the FHE decryption key to acquire the value of the sum of each label, and selects the label with the largest value of the sum to perform cluster filtering. Then, the search target identification unit 32 checks the maximum value of the value of the sum (Step S209).

Next, the search target identification unit 32 determines whether the maximum value of the value of the sum is the search threshold or more (Step S210). If the maximum value is less than the search threshold (No at Step S210), the search target identification unit 32 notifies the data searcher U that the document information 24 corresponding to the query sentence is not registered in the information search server 1 (Step S211). The question-and-answer process then ends.

In contrast, if the maximum value is the search threshold or more (Yes at Step S210), the search target identification unit 32 decrypts the encrypted cos similarity corresponding to the label corresponding to the maximum value of the value of the sum with fully homomorphic encryption using the FHE decryption key (Step S212).

Next, the search target identification unit 32 identifies the document information 24 with the top certain number of cos similarities as the search target, and acquires the identification information of the document information 24 as the search target (Step S213).

The search target list generation unit 33 generates the search target list in which the identification information acquired by the search target identification unit 32 and dummy identification information are registered (Step S214).

The search target list generation unit 33 then transmits the search target list to the information search server 1 to request a search (Step S215).

The search unit 15 of the information search server 1 searches the search table 14 using the identification information contained in the search target list to extract the encrypted data corresponding to those pieces of identification information. The search unit 15 then transmits the extracted encrypted data to the searcher terminal apparatus 3 (Step S216).

The decryption unit 34 of the searcher terminal apparatus 3 decrypts the received encrypted data using the AES common key to acquire the document information 24 corresponding to the received encrypted data (Step S217).

The query sentence input unit 35 inputs a query sentence with the document information 24 acquired by the decryption unit 34 added as knowledge to the LLM 36 (Step S218).

The LLM 36 infers an answer to the query sentence using the added document information 24 and the like (Step S219).

The answer output unit 37 acquires the answer to the query sentence output from the LLM 36, and provides the data searcher U with the answer (Step S220).

As described above, the provider terminal apparatus 2 according to the present embodiment clusters the vectors obtained by embedding for the document information 24, and assigns the label of each cluster to the vector. Then, the provider terminal apparatus 2 causes the information search server 1 to hold the index obtained by encrypting the vector corresponding to the document information 24 using homomorphic encryption together with the information on the label. The information search server 1 receives the search request using the search query obtained by encrypting the vector of the query sentence for a question using homomorphic encryption, calculates the inner product of the encrypted vectors between the search query and each index to calculate the encrypted cos similarities, and transmits them to the searcher terminal apparatus 3. The searcher terminal apparatus 3 decrypts the sum of the encrypted cos similarities of each label to calculates the value of the sum, and performs cluster filtering to select the cluster corresponding to the label with the maximum value of the value of the sum. Then, the searcher terminal apparatus 3 transmits the identification information of the document information 24 corresponding to the top certain number of cos similarities out of the cos similarities obtained by decrypting the encrypted cos similarities contained in the selected cluster to the information search server 1 to cause it to perform a search.

In this way, the information search server 1 performs the process using the information in encrypted form, and can thus satisfy the requirements of the confidentiality of queries, the confidentiality of indexes, and the confidentiality of provided data to the information search server 1. In addition, by performing a search based on similarity to query sentences, which are natural sentences, degradation in the flexibility of the search is reduced. Thus, it is possible to improve search accuracy while ensuring the safety of information.

In addition, cluster filtering is performed using the value of the sum of the cos similarities of each cluster, and the encrypted cos similarity contained in the selected cluster is encrypted to identify the document information 24 as the search target, and can thus the number of times of decryption of homomorphic encryption, which has high decryption cost, can be reduced. Therefore, the processing load of the information search server 1 can be reduced, and the time until answers to questions are obtained can be shortened.

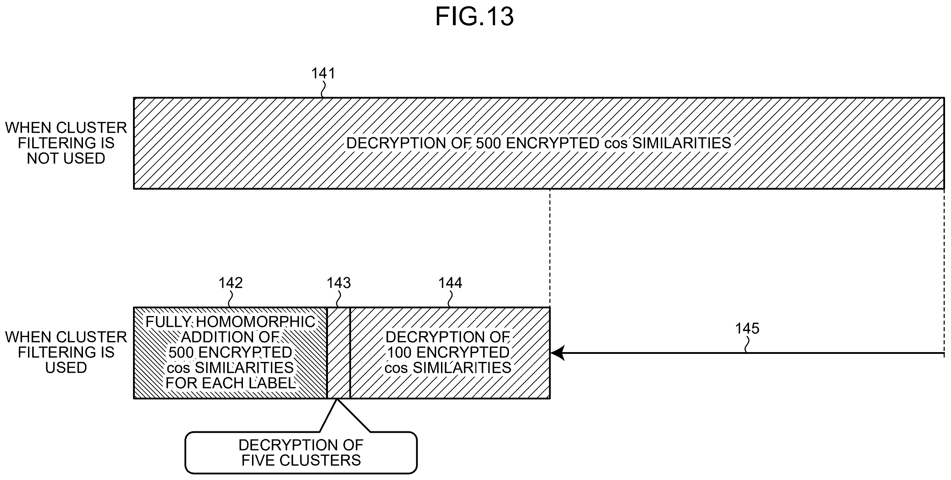

FIG. 13 is a diagram representing an effect when cluster filtering is used. For example, a case of extracting the cos similarities with high similarities are extracted based on 500 encrypted cos similarities will be described. Each graph in FIG. 13 represents a search cost.

When cluster filtering is not used, a process is performed to decrypt all 500 encrypted cos similarities to obtain 500 cos similarities, and to extract the cos similarities with high values among them. In that case, a search cost 141 is incurred in the search process in the information processing system 100.

In contrast, when cluster filtering is used, the process is as follows. A case in which 500 encrypted cos similarities are classified into five clusters will be described. In this case, full homomorphic addition of 500 encrypted cos similarities for each label is performed. Since the homomorphic addition is very lightweight, a search cost 142 of its process can be kept small. Next, each of the sums of the five encrypted cos similarities is decrypted. In this case, homomorphic encryption, which has high decryption cost, is decrypted only five times, and thus a search cost 143 of this process can also be kept small. Then, the encrypted cos similarities contained in the cluster with the largest value of the sum obtained from the decrypted result are decrypted, and the cos similarities with high values are extracted therefrom. In this case, since it only needs decryption of the number of encrypted cos similarities contained in one cluster, a search cost 144 of this process can also be kept small.

As a whole, when cluster filtering is used, a search cost 145 can be reduced compared to the case in which cluster filtering is not used. In addition, when cluster filtering is used, as the data is divided into many clusters more uniformly, the effect of reduction in search cost can be increased more on average.

### Hardware Configuration

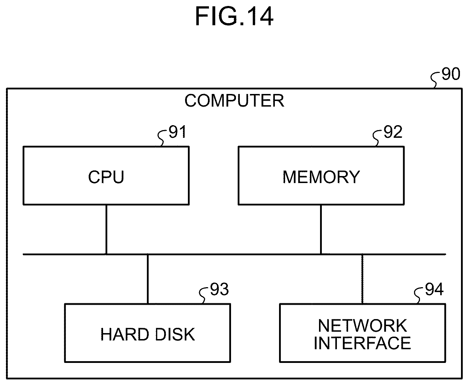

FIG. 14 is a hardware configuration diagram of a computer. Next, an example of a hardware configuration to implement each function of the information search server 1, the provider terminal apparatus 2, and the searcher terminal apparatus 3 will be described with reference to FIG. 14. The information search server 1, the provider terminal apparatus 2, and the searcher terminal apparatus 3 can all implement their functions, for example, with a computer 90 illustrated in FIG. 14.

As illustrated in FIG. 14, the computer 90 includes, for example, a central processing unit (CPU) 91, a memory 92, a hard disk 93, and a network interface 94. The CPU 91 is connected to the memory 92, the hard disk 93, and the network interface 94 via a bus.

The network interface 94 is an interface for communication between the computer 90 and external apparatuses. For example, the network interface 94 relays communications between the information search server 1, and the provider terminal apparatus 2 and the searcher terminal apparatus 3.

The hard disk 93 is an auxiliary storage. For example, in the case of the information search server 1, the hard disk 93 stores therein the search table 14 illustrated in FIG. 2. In addition, the hard disk 93 stores therein various computer programs including computer programs to implement the functions of the search query acquisition unit 11, the cos similarity calculation unit 12, the encrypted cos similarity list generation unit 13, and the search unit 15 illustrated in FIG. 2.

In the case of the provider terminal apparatus 2, the hard disk 93 stores therein the document information 24 illustrated in FIG. 2. In addition, the hard disk 93 stores therein various computer programs including computer programs to implement the functions of the encryption unit 21, the search table generation unit 22, the label generation unit 23, and the embedding unit 25 illustrated in FIG. 2.

In the case of the searcher terminal apparatus 3, the hard disk 93 stores therein the LLM 36 illustrated in FIG. 2. In addition, the hard disk 93 stores therein various computer programs including computer programs to implement the functions of the query sentence encryption unit 31, the search target identification unit 32, the search target list generation unit 33, the decryption unit 34, the query sentence input unit 35, and the answer output unit 37 illustrated in FIG. 2.

The memory 92 is a main storage. For the memory 92, for example, a dynamic random access memory (DRAM) can be used.

The CPU 91 reads various computer programs from the hard disk 93, expands them into the memory 92, and executes them. This allows the CPU 91, in the case of the information search server 1, to implement the functions of the search query acquisition unit 11, the cos similarity calculation unit 12, the encrypted cos similarity list generation unit 13, and the search unit 15 illustrated in FIG. 2. In the case of the provider terminal apparatus 2, the CPU 91 implements the functions of the encryption unit 21, the search table generation unit 22, the label generation unit 23, and the embedding unit 25 illustrated in FIG. 2. In the case of the searcher terminal apparatus 3, the CPU 91 implements the functions of the query sentence encryption unit 31, the search target identification unit 32, the search target list generation unit 33, the decryption unit 34, the query sentence input unit 35, and the answer output unit 37 illustrated in FIG. 2.

In one aspect, the present invention can improve search accuracy while ensuring the safety of information.

## Claims

1. An information processing system (100) comprising:
a provider terminal apparatus (2);
a searcher terminal apparatus (3); and
an information search server (1),
the provider terminal apparatus (2) executing
a process to vectorize a plurality of pieces of provided data as an information search target and to
obtain a plurality of first vectors, and to encrypt the plurality of obtained first vectors with homomorphic encryption to generate a plurality of indexes, and
a process to generate a plurality of pieces of encrypted data obtained by encrypting the pieces of provided data, and to transmit a search table (14) in which the indexes and the encrypted data are registered in correspondence with each other to the information search server (1),
the searcher terminal apparatus (3) executing
a process to vectorize query information that is used for input search and to obtain a second vector, and to transmit a search query generated by encrypting the obtained second vector with the homomorphic encryption to the information search server (1), and
a process to receive a similarity list as information on similarity between the index and the search query from the information search server (1), and to extract a similar index similar to the search query based on the similarity list,
the information search server (1) executing
a process to receive the search table (14) from the provider terminal apparatus (2),
a process to receive the search query from the searcher terminal apparatus (3),
a process of homomorphic operation according to the homomorphic encryption between the search query and each of the indexes registered in the search table (14), and
a process to create a similarity list as information on similarity between the index and the search query based on the process of homomorphic operation, and to transmit the similarity list to the searcher terminal apparatus (3).

2. The information processing system (100) according to claim 1, wherein
the provider terminal apparatus (2) executes a clustering process to classify the pieces of provided data into a plurality of clusters, and
the searcher terminal apparatus (3)
performs cluster filtering to select a specific cluster out of the clusters based on a certain feature of each of the clusters, and
executes a process to extract the similar index out of first indexes based on first provided data belonging to the specific cluster.

3. The information processing system (100) according to claim 1 or 2, wherein
the searcher terminal apparatus (3) further executes a process to transmit identification information of first encrypted data corresponding to the extracted similar index to the information search server (1),
the information search server (1) further executes a process to extract the encrypted data based on the identification information received from the searcher terminal apparatus (3) to transmit the encrypted data to the searcher terminal apparatus (3), and
the searcher terminal apparatus (3)
decrypts the first encrypted data received from the information search server (1) to acquire second provided data, and
further executes a process to perform inference based on the second provided data and the query information.

4. The information processing system according to claim 2, wherein
the provider terminal apparatus (2) executes the clustering process including a process to generate the clusters by clustering the first vectors, and
the searcher terminal apparatus (3)
performs certain operation using an operation result of the homomorphic operation between each of the indexes based on the provided data contained in each of the clusters and the search query, and executes the cluster filtering including a process to select the specific cluster with information obtained by decrypting a result of the certain operation as the certain feature of each of the clusters, and
executes a process to extract the similar index based on information obtained by decrypting an operation result of the homomorphic operation between each of the first indexes and the search query.

5. An information processing method comprising:
by a provider terminal apparatus (2), executing
a process to vectorize a plurality of pieces of provided data as an information search target and to obtain a plurality of first vectors, and to encrypt the plurality of obtained first vectors with homomorphic encryption to generate a plurality of indexes, and
a process to generate a plurality of pieces of encrypted data obtained by encrypting the pieces of provided data, and to transmit a search table (14) in which the indexes and the encrypted data are registered in correspondence with each other to the information search server (1),
by a searcher terminal apparatus (3), executing a process to vectorize query information that is used for input search and to obtain a second vector, and to transmit a search query generated by encrypting the obtained second vector with the homomorphic encryption to the information search server (1),
by the information search server (1), executing
a process to receive the search table (14) from the provider terminal apparatus (2),
a process to receive the search query from the searcher terminal apparatus (3),
a process of homomorphic operation according to the homomorphic encryption between the search query and each of the indexes registered in the search table (14), and
a process to create a similarity list as information on similarity between the index and the search query based on the process of homomorphic operation, and to transmit the similarity list to the searcher terminal apparatus (3), and
by the searcher terminal apparatus (3), receiving the similarity list, and extracting a similar index similar to the search query based on the similarity list.
